# EUROPÄISCHE PATENTSCHRIFT

(11) **EP 0 982 193 B1**
(45) Veröffentlichungstag und Bekanntmachung des Hinweises auf die Patenterteilung: **14.09.2005**
(21) Anmeldenummer: 99112211.0
(22) Anmeldetag: 25.06.1999
(51) Int. Cl.: B60R 16/02, B60T 8/00, B60K 41/02

(54) **System zur Steuerung des Antriebs eines Fahrzeugs**
Vehicle drive control system
Système de commande de l'entrainement d'un véhicule

(30) Priorität: 24.08.1998 DE 19838333
(43) Veröffentlichungstag der Anmeldung: 01.03.2000
(73) Patentinhaber: ROBERT BOSCH GMBH, 70442 Stuttgart (DE)
(72) Erfinder: Bitzer, Rainer, 71287 Weissach (DE); Bauer, Juergen, 71229 Leonberg (DE); Diehl, Udo, 70197 Stuttgart (DE); Kind, Werner, 71706 Markgroeningen (DE); Bellmann, Holger, 71636 Ludwigsburg (DE); Pitzal, Volker, 73550 Waldstetten (DE); Bolz, Martin-Peter, 71720 Oberstenfeld (DE); Hess, Werner, 70499 Stuttgart (DE); Mayer, Rainer, 71263 Weil der Stadt (DE); Tischer, Christian, 71282 Hemmingen (DE); Grosse, Christian, 70806 Kornwestheim (DE); Schulz, Udo, 71665 Vaihingen/Enz (DE); Poljansek, Marko, 72768 Reutlingen (DE); Heidrich, Torsten, 71665 Vaihingen/Enz (DE)

(56) Entgegenhaltungen:
- DE-A- 19 637 210
- US-A- 5 351 776
- TORSTEN BERTRAM: "cartronic an open architecture for networking the control systems of an automobile" ANNUAL INDEX/ABSTRACTS OF SAE TECHNICAL PAPERS,US,SOCIETY OF AUTOMOTIVE ENGINEERS, WARRENDALE, PA, 1998, Seite 34 XP002122466

## Beschreibung

### Stand der Technik

Die Erfindung betrifft ein Computersystem zur Steuerung einer Antriebseinheit eines Fahrzeugs.

Bei bekannten Steuerungen von Funktionseinheiten im Kraftfahrzeug ist die Software nach der Funktion in diesen Einheiten strukturiert. Dabei besteht die Möglichkeit, daß verschiedene Funktionen auf die gleichen Stellglieder zugreifen. Eine Austauschbarkeit von Softwareteilen ist nur mit großem Aufwand möglich. Eine modulare Entwicklung wird nicht unterstützt.

Zur Verbesserung dieser Situation wird beispielsweise in der gattungsbildenden EP 0507 072 B1 (US-Patent 5,351,776) ein Steuerverfahren bzw. eine Steuervorrichtung vorgeschlagen, bei welchem eine Steuerung des Gesamtfahrzeugs, wenigstens bezüglich der Antriebsleistung, der Motorleistung und des Bremsvorgangs durchgeführt wird. Diese Schrift weist eine hierarchische Auftragsstruktur für die Steueraufgaben auf, die den Fahrer bzw. den Fahrerwunsch in der höchsten Hierarchieebene sieht. Die dort beschriebene Steuerungsstruktur umfaßt Koordinationselemente, welche einen aus einer höheren Hierarchieebene ausgehenden Befehl in Befehle für Elemente einer nachgeordneten Hierarchieebene umsetzen. Die Inhalte der von oben nach unten in der Hierarchiestruktur weitergegebenen Befehle stellen physikalische Größen dar, die die Schnittstellen zwischen den einzelnen Hierarchieebenen bestimmen. Die beschriebenen Schnittstellen orientieren sich dabei an den physikalischen Gegebenheiten der Fahrzeugbewegung. Eine darüber hinausgehende Betrachtung einer im Gesamtzusammenhang einer Fahrzeugsteuerung beispielsweise unter Berücksichtigung der Nebenaggregate (z. B. Klimaanlage, Servopumpe, etc.) oder des Bordnetzes wird nicht beschrieben. Aufgrund der zunehmenden Vernetzung von bisher eigenständigen Systemen in der Fahrzeugtechnik reicht die ausschließliche Betrachtung von Antrieb und Bremse nicht mehr aus. Vielmehr ist es erforderlich, eine Antriebssteuerung eingebettet in die Steuerungsstruktur des Gesamtfahrzeugs anzugeben, mit deren Hilfe auch außerhalb des Antriebs liegende Systeme und deren Kommunikationsbeziehungen mit diesen verknüpft und koordiniert werden können, was hier noch nicht erfolgt.

Dazu weißt die SAE Veröffentlichung XP 002122466 Torsten Bertram et.al cartronic an open architecture for networking the control systems of an automobile darauf hin Structuregeln, Modellierungsregeln und Muster für die gesamte integrierte Steuerung eines Fahrzeugsbereitzustellen. Eine konkrete Ausgestaltung ist aber nicht gezeigt

Daneben ist in der nicht vorveröffentlichten deutschen Patentanmeldung 197 09 317.5 vom 07.03.1997 das Prinzip einer hierarchischen Grundstruktur eines Fahrzeuggesamtsystems genannt. Dort ist ein Fahrzeugkoordinator Auftraggeber für die Komponenten Antrieb (als Quelle mechanischer Leistung), Fahrzeugbewegung, Karosserie- und Innenraum und elektrisches Bordnetz (als Quelle elektrischer Leistung). Die Kommunikation zwischen den einzelnen Komponenten dieser Struktur erfolgt nur zwischen den übergeordneten Komponenten und in dieser zugewiesenen Komponenten im Rahmen fest vorgegebener Kommunikationsbeziehungen. Diese Kommunikationsbeziehungen sind der Auftrag, der grundsätzlich von einer Komponente in einer höheren an eine Komponente in einer direkt darunterliegenden Hierarchieebene gegeben wird und von der beauftragten Komponente erfüllt werden muß, die Anforderung, die auch von einer Komponente in einer niedrigeren an eine Komponente in einer höheren Hierarchieebene gegeben wird und die von der angeforderten Komponente erfüllt werden sollte und die Abfrage, bei der von der gefragten Komponente eine Antwort an die fragende Komponente erwartet wird. Im Rahmen dieser vorgegebenen Kommunikationsbeziehungen zwischen den Komponenten findet die Steuerung des Fahrzeugs statt. Es werden zur Steuerung des Fahrzeugs fest vorgegebene physikalische Größen übermittelt, die definierte Schnittstellen zwischen den einzelnen Komponenten darstellen. Eine detaillierte Ausgestaltung der Komponenten Antriebsstrang und Motor bezüglich Benzin- oder Dieselmanagement unter Berücksichtigung der dabei relevanten Kommunikationsbeziehungen im Fahrzeuggesamtsystem wird nicht gezeigt.

Aus der ebenfalls nicht vorveröffentlichten deutschen Patentanmeldung 197 26 214.7 vom 20.06.1997 ist das Prinzip einer gemeinsamen Steuerung einer im Antriebsstrang angeordneten Servokupplung und eines ebenfalls im Triebstrang angeordneten Fahrzeugmotors mit einem Fahrpedal, dessen Stellung erfaßt wird, bekannt. Bei Vorliegen eines vorgebbaren Betriebszustandes werden die Servokupplung und der Fahrzeugmotor derart gesteuert, daß die erfaßte Stellung des Fahrpedals die Beschleunigung und/oder die Geschwindigkeit des Fahrzeugs vorgibt. Eine Einbettung in das Fahrzeuggesamtsystem und die dabei vorliegenden Kommunikationsbeziehungen ist nicht dargestellt.

### Aufgabe und Vorteile der Erfindung

Im Gegensatz zum Stand der Technik ist es deshalb vielmehr erforderlich, eine Steuerungsstruktur des Gesamtfahrzeugs anzugeben, mit deren Hilfe der Triebstrang und speziell die Antriebseinheit mit auch außerhalb liegenden Komponenten verknüpft werden können und deren Aufgabe koordiniert werden können, da im modernen Fahrzeug solche Komponenten ebenso Anforderungen an den Triebstrang stellen, wie in ihnen Informationen zur Steuerung desselben vorliegen. Deshalb ist es notwendig, dem Bereich des Triebstranges und der Antriebseinheit in einem Motormanagement in ein Gesamtkonzeptfahrzeug einzubinden, was sich bisher im Stand der Technik nicht findet.

Vorteilhafte Ausgestaltungen und weitere Vorteile finden sich im Zusammenhang mit den Merkmalen des Hauptanspruchs und den untergeordneten Ansprüchen sowie in der Beschreibung.

### Zeichnung

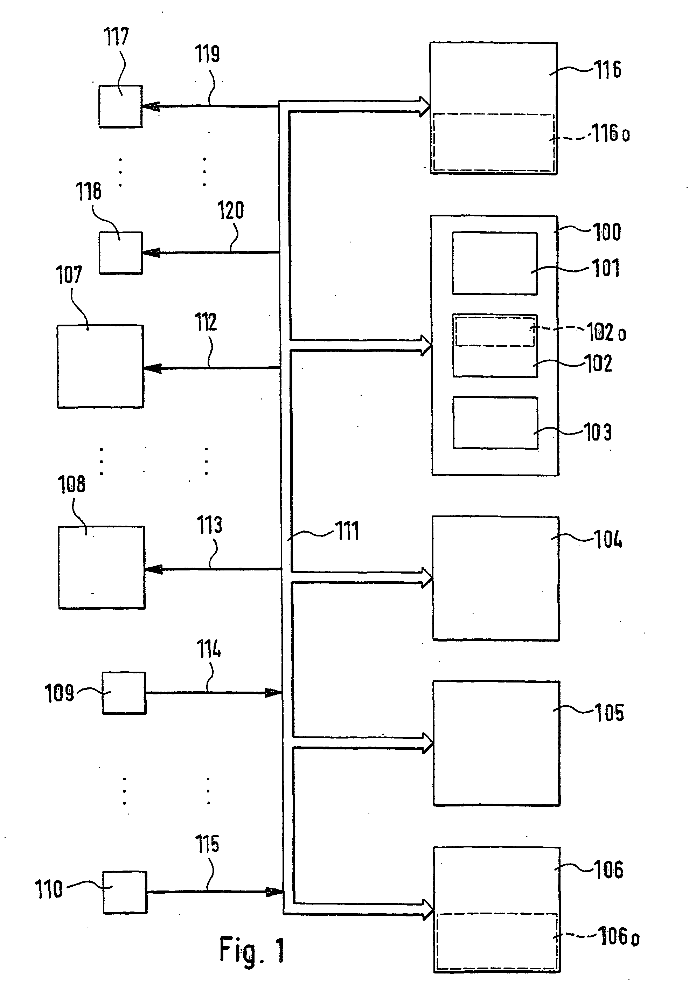

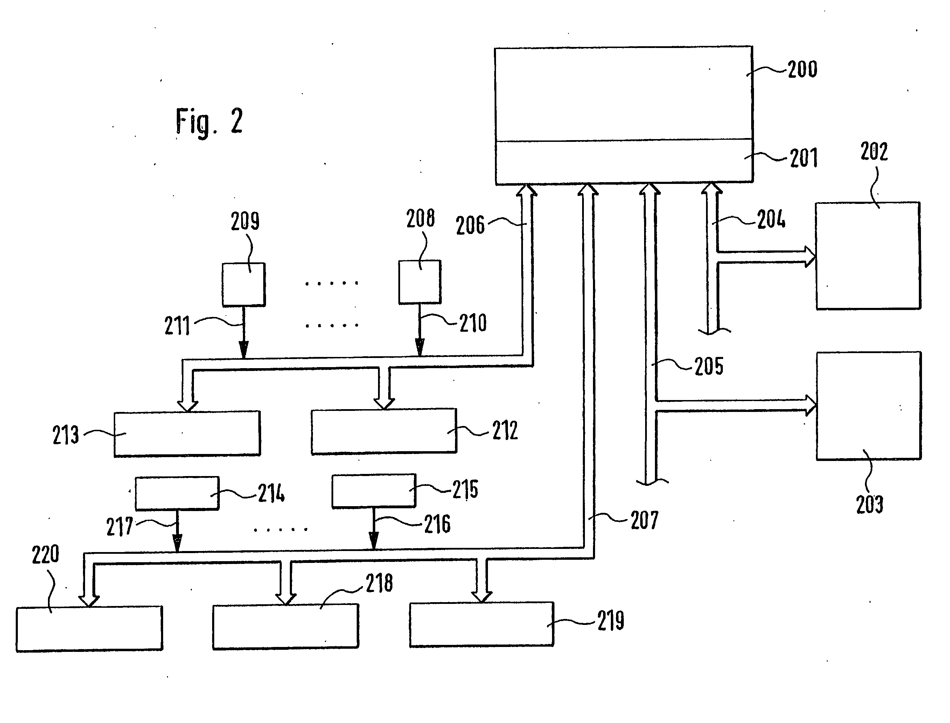

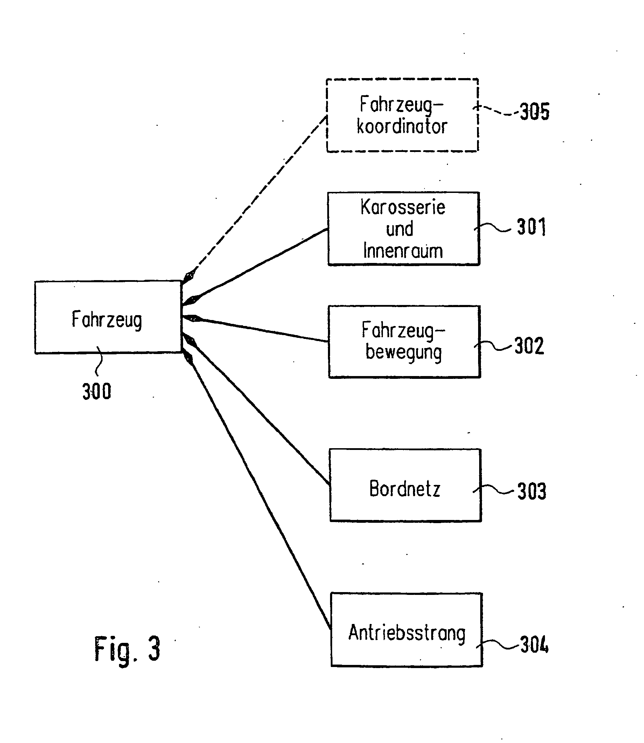

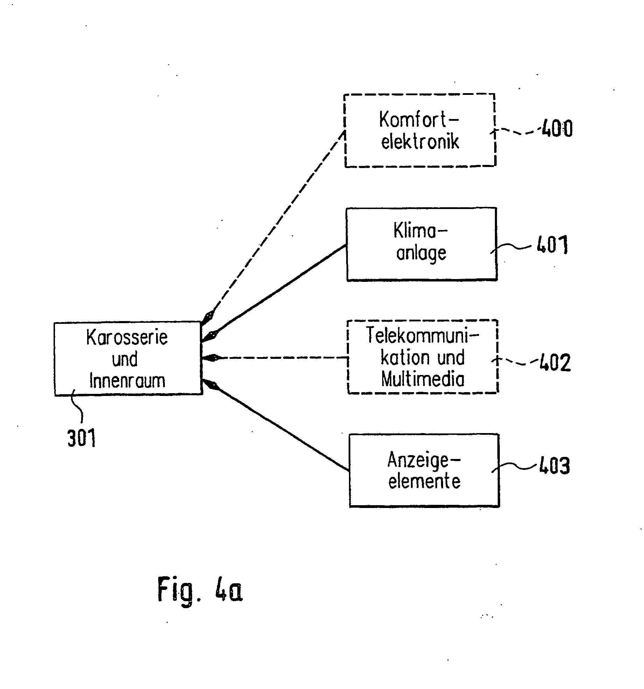

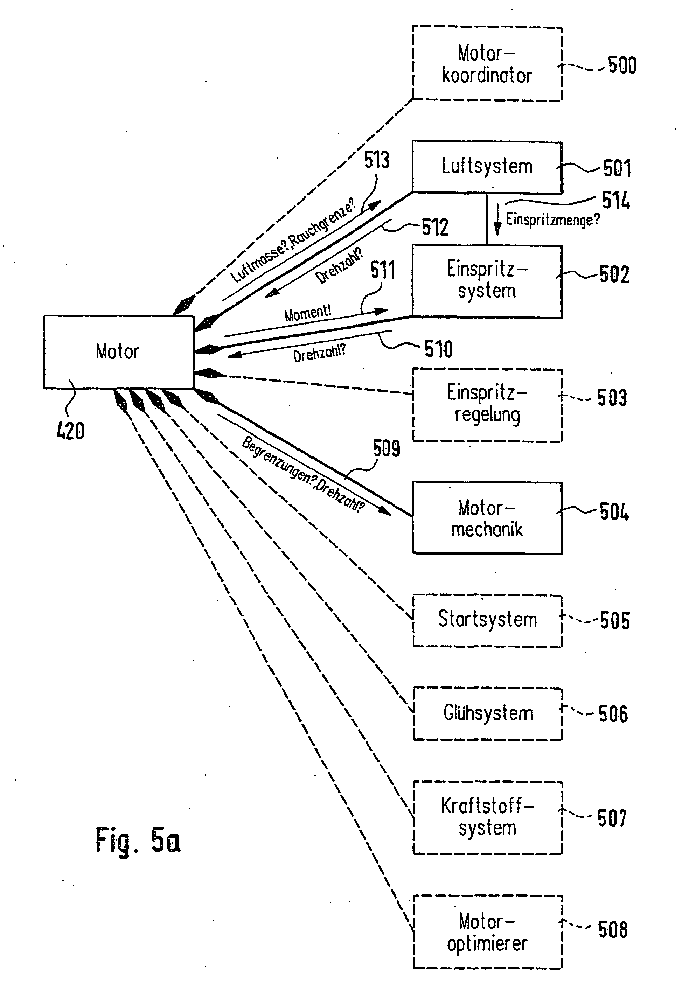

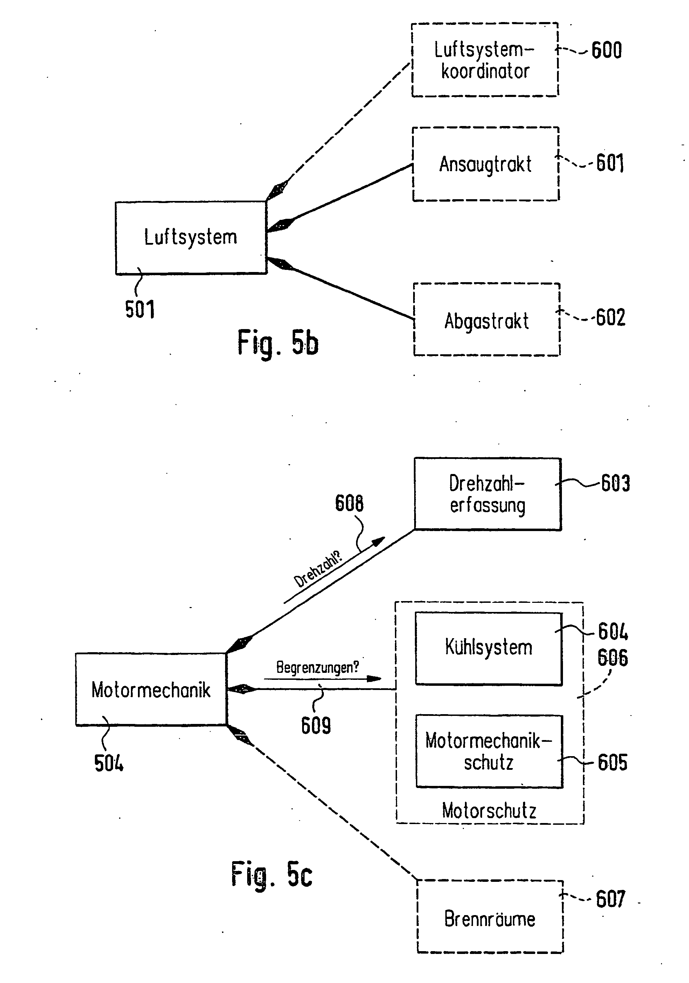

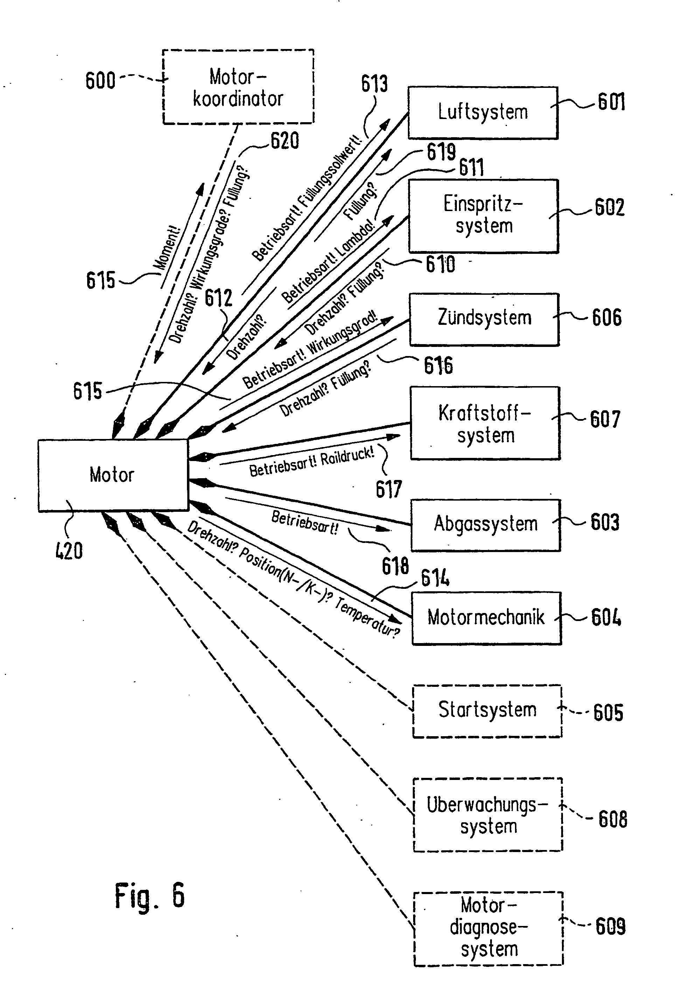

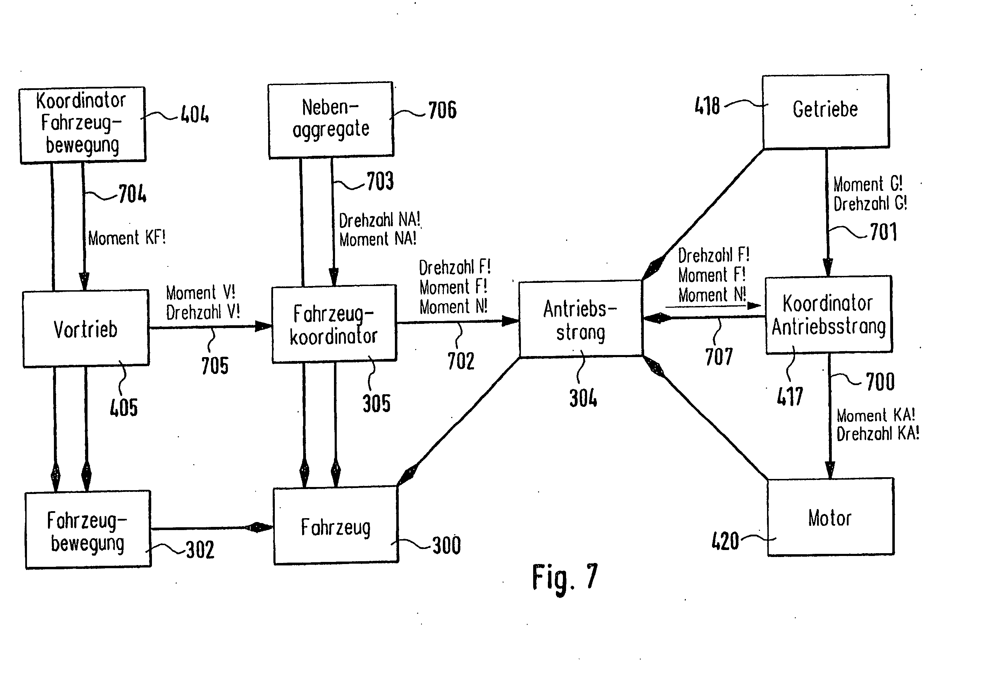

Figur 1 zeigt ein Blockschaltbild einer möglichen Konfiguration eines Steuerungssystems eines Fahrzeugs mit einem Leitungs- bzw. Bussystem. In Figur 2 ist in einem weiteren Blockschaltbild eine mögliche Hardwarekonfiguration eines vernetzten Steuerungssystems eines Fahrzeugs mit mehr als einem Bus- bzw. Leitungssystem dargestellt. Figur 3 offenbart grundsätzliche Komponenten der Architektur für das Fahrzeug als Gesamtsystem. Figur 4a-d zeigt eine Verfeinerung der Komponenten aus Figur 3 mit einer Definition der Schnittstellen. Zur konkreten Antriebssteuerung wird die Komponente Antrieb bzw. Motor, welche Funktionseinheiten der Antriebseinheit bezüglich eines Dieselmanagements umfaßt, in Figur 5a in weitere Komponenten aufgeschlüsselt. Mögliche weitere Verfeinerungen des Luftsystems und der Antriebs- bzw. Motormechanik zeigen Figur 5b und c. Figur 6 zeigt dem gegenüber das Prinzip der Verfeinerung der Komponente Motor im speziellen Fall eines Benzinmanagements Figur 7 schließlich offenbart ein konkretes Beispiel des Datenflußes mit Erfassung des Fahrerwunsches am Fahrpedal als Teil der Komponente Fahrzeugbewegung bzw. in der Verfeinerung der Komponente Vortrieb bis zur Bestimmung der Vorgaben für die Antriebseinheit unabhängig vom Motortyp.

### Beschreibung der Ausführungsbeispiele

In Figur 1 ist ein Übersichtsblockschaltbild eines möglichen Steuerungssystems eines Fahrzeugs dargestellt. Dabei ist mit 100 eine Steuereinheit zur Steuerung des Motors bzw. der Antriebseinheit gezeigt. In dieser Steuereinheit hardwaremäßig enthalten sind mit 101 die Steuerung des Luftsystems (u.a. Luftzumessung), mit 102 die Steuerung des Einspritzsystems (u.a. Kraftstoffzumessung), die optional auch eine Zündungseinstellung 102o z. B. für Benzin-Brennkraftmaschinen oder ein Glühsystem bei DieselBrennkraftmaschinen enthält. Des weiteren ist eine Steuerung der Antriebs- bzw. Motormechanik 103 z.B. zur Berechnung des Motorschleppmoments, zum Schutz vor mechanischer Überlastung, Bestimmung der Motordrehzahlen und des Kurbelwellenwinkels, usw. vorgesehen. Daneben ist eine Steuereinheit 105 zur Steuerung der Bremsen bzw. des Bremsvorgangs, eine Steuereinheit 104 zur Steuerung eines automatischen Getriebes und/oder mit 106 eine Steuereinheit zur Steuerung der Fahrwerkseinstellung bzw. zur Fahrdynamikregelung gezeigt, wobei in der Steuereinheit 106 optional mit 106o eine Lenkungssteuerung bei möglichem Eingriff in das Lenksystem (Steer by wire) vorgesehen ist. Darüber hinaus kann bei einem elektronisch geregelten Bordnetz mit Steuereinheit 116 eine Einheit zur Steuerung des Bordnetzes eingesetzt werden. In diese integriert können Steuereinheiten zur Steuerung einzelner oder mehrerer Nebenaggregate bzw. Anzeigenelemente sein. Beispielhaft ist hiermit 116o optional eine Steuereinheit für die Klimaanlage in die Steuereinheit 116 des Bordnetzes integriert. Ein Leitungssystem bzw. Bussystem 111 (z.B. ein CAN-Bus) verbindet die einzelnen Steuereinheiten bzw. Steuergeräte zum gegenseitigen Informations- und Datenaustausch. An dieses Leitungssystem bzw. Bussystem 111 sind über entsprechende Leitungen 114, 115, welche beispielhaft für eine beliebige Anzahl ausgeführt sind, verschiedene Meßeinrichtungen 109, 110 angebunden, wobei auch hier beispielhaft zwei einer beliebigen Anzahl herausgestellt sind. Diese Meßeinrichtungen 109, 110, usw. erfassen Betriebsgrößen des Fahrzeugs, insbesondere von Motor und Antriebsstrang. Die erfaßten Betriebsgrößen stellen dabei im allgemeinen bekannte Betriebsgrößen wie beispielsweise Motordrehzahl, Motortemperatur, Abtriebsdrehzahl, Getriebestellung bzw. Übersetzung, Ganginformation, Wandlerschlupf, Turbinendrehzahl, Generatordrehzahl, Fahrgeschwindigkeit, Batteriespannung, usw. dar. Daneben sind an das Bussystem 111 über entsprechende Leitungen 112, 113 Stelleinrichtungen 107, 108 angeschlossen. Auch hierbei sind beispielhaft lediglich zwei Stelleinrichtungen dargestellt, welche die Vielzahl möglicher Steller im Fahrzeug repräsentieren. Dies sind beispielsweise Zündungssysteme, elektrisch steuerbare Drosselklappen, Kraftstoffeinspritzsysteme, Steller eines Automatikgetriebes wie z.B. Kupplungen oder Fahrwerksteller, wie elektrisch steuerbare Federdämpferelemente, Drucksysteme zur Bremsbetätigung, die Servopumpe im Lenkungsbereich sowie Stellmotoren z.B. für elektrische Fensterheber oder Schiebedach der Karosserie- und Innenraumelektronik. Über entsprechende Leitungen 119, 120 sind wieder repräsentativ mit 117 und 118 zwei Anzeigeelemente einer beliebigen Anzahl dargestellt, die sich beispielsweise ebenfalls in der Karosserie- und Innenraumelektronik finden. Diese z.B. optischen oder akustischen Anzeigeelemente sind hierbei separat zu den Stellelementen 107, 108 dargestellt.

Die in Figur 1 dargestellten Steuereinheiten führen die ihnen zugeordneten Funktionen unter Erfassung der dazu notwendigen Betriebsgrößen durch und bilden Steuerwerte für die verschiedene Stelleinrichtungen und Anzeigeelemente. Durch einen solchen dargestellten Systemverbund können einzelne Elemente oder Funktionseinheiten nicht mehr getrennt betrachtet werden, sondern eingebunden in das Gesamtkonzept. Bei einer Antriebs- bzw. Motorsteuerung beispielsweise müssen nicht nur Momenten- bzw. Leistungsanforderungen oder Drehzahlvorgaben der Fahrzeugbewegung, wie Lenkung, Bremse oder Fahrdynamikregelung berücksichtigt werden, sondern auch die Leistungs- bzw. Momentenforderungen und/oder Drehzahlinformationen aller Nebenaggregate und Stellglieder. Darüber hinaus ergibt sich aber auch die Möglichkeit, durch den Zugriff auf Daten und Informationen anderer Funktionseinheiten und Systeme, wie z.B. Umweltgrößen, Fahrzustandsgrößen, Fahrzeuggrößen und Benutzergrößen eine optimal an die jeweiligen Gegebenheiten angepaßte Antriebssteuerung durchzuführen.

Ein weiteres Beispiel für eine mögliche Hardwarekonfiguration eines Steuerungssystems für ein Fahrzeug ist in Figur 2 dargestellt. Dazu ist mit 200 ein sogenannter Master-Controller gezeigt, der unter anderem ein Interface 201 (Gateway) umfaßt, an welchem mehrere z.B. verschiedene Bussysteme angeschlossen sind. Gegenüber Figur 1 ist hier durch die Verwendung mehrerer Leitungs- bzw. Bussysteme und den dadurch optionalen Einsatz unterschiedlicher Übertragungsraten der Informationen bzw. Daten eine flexiblere Anpassung der Funktionseinheiten an die Erfordernisse im Fahrzeug möglich. Die Aufteilung dieser Bussysteme ist allerdings beispielhaft. Ein erstes Bussystem 206 ermöglicht die Kommunikation des Masters 200 mit z.B. den das Abtriebsmoment steuernden Elementen 209 bis 212. So ist mit Block 212 ein Motorsteuergerät und mit Block 213 eine Steuereinheit für die Getriebesteuerung dargestellt. Entsprechende Leitungen 210, 211 sorgen dafür, daß die, zur Steuerung des Abtriebsmoments notwendigen Eingangsdaten z.B. im Form von Meßwerten aus den Meßeinrichtungen 208, 209 in den Bus und damit in die Steuereinheiten 213, 212 gelangen. Auch hier sind die Meßeinrichtungen und zugehörigen Leitungen beispielhaft nur zweifach dargestellt, die Punkte dazwischen dienen dazu die hier mögliche Konfigurationsbandbreite zu dokumentieren. Die durch die Meßeinrichtungen 209, 208 erfaßten Betriebsgrößen des Fahrzeugs und/oder des Motors, wie beispielsweise Motordrehzahl, zugeführte Luftmenge bzw. Luftmasse, Last, Fahrgeschwindigkeit, Abgaszusammensetzung, Motortemperatur, Getriebeübersetzung, Schaltzustand eines Wandlers (z.B. Ganginformation), Schlupf, Klopfneigung, usw. werden dabei in dem Bus 206 eingekoppelt. Bus 207 beipsielsweise verbindet den Master-Controller 200 bzw. das Gateway 201 mit, das Fahrzeug, insbesondere das Fahrwerk, steuernden Funktionseinheiten. Dies sind Funktionseinheiten zur Bremsensteuerung 219, Lenkung 218 und/oder zur Fahrwerkregelung 220. Analog zu den Ausführungen zu Bus 206 werden hier über die Leitungen 216, 217 aus den Meßeinrichtungen 214, 215 Betriebsgrößen des Fahrzeugs, insbesondere zur Antriebssteuerung notwendige Betriebsgrößen eingekoppelt. Dies können beispielsweise Federdämpferwege, Raddrehzahlen, Bremskräfte, Lenkungsmomente, Leistungsverbrauch in der Lenkung, bei z.B. Steer by wire oder durch die Servopumpe, Radgeschwindigkeiten, eine Fahrzeuggeschwindigkeit, Querkräfte und Schlupfgrößen sein. Auch hier sind nur zwei Meßeinrichtungen 214, 215 mit den entsprechenden Zuleitungen 217, 216 beispielhaft dargestellt. Daneben sind noch weitere Bussysteme vorgesehen. Der Bus 205 verbindet den Master-Controller 200 mit Geräten der Karosserie- und Innenraumelektronik (z.B. Generator, Licht, Sitzverstellung, Schiebedachantrieb, Fensterheber, intelligente Batterie, usw.), die durch Block 203 repräsentiert sind. Der Übersichtlichkeit halber ist das Bussystem 205 nicht weiter verlängert. Über ein weiteres Bussystem 204, ebenfalls verkürzt dargestellt, sind gegebenenfalls Geräte zur Telekommunikation und/oder Multimedia- und Vergnügungselektronik mit dem Master-Controller 200 verbunden. Diese Geräte sind mit Block 202 angedeutet. Die Verwendung einer Vielzahl von Bussystemen 204 bis 207 macht es möglich, diese vorzugsweise mit einer jeweils an die Endgeräte angepaßten Datenübertragungsrate zu betreiben, welche sich dann durch die Verwendung getrennter Bussysteme voneinander jeweils unterscheiden kann. Die zur Beeinflussung von Motor, Bremsanlage, Lenkung, usw. notwendigen Stellelemente und Stellglieder sind entweder an die jeweilige Steuereinheit oder an den jeweiligen Bus angeschlossen.

Die in den Figuren 1 und 2 dargestellten Konfigurationen stellen Beispiele dar, welche in anderen Ausführungsformen ebenfalls anders gestaltet sein können. Deshalb ist es wesentlich, eine Steuerungsstruktur zu generieren, die unabhängig von der zugrundeliegenden Hardwarekonfigurationen eingesetzt werden kann und/oder mit einfachen Mitteln und geringem Aufwand an diese angepaßt werden kann. Dazu werden die in Hardware vorgegebenen Funktionseinheiten in eine Steuerungsstruktur aus softwaregenerierten Komponenten abgebildet.

In Figur 3 ist das Prinzip einer Grundstruktur eines Fahrzeuggesamtsystems dargestellt. Ausgehend von einer Komponente Fahrzeug 300 in der sich optional ein Fahrzeugkoordinator befinden kann unterscheidet man vier Funktionsgruppen, welche in den Komponenten
- Fahrzeugkoordinator 305,
- Karosserie und Innenraum 301,
- Fahrzeugbewegung 302,
- Bordnetz 303 und
- Antriebsstrang 304 dargestellt sind.
Der Fahrzeugkoordinator 305 kann optional eine eigene Komponente analog zu den Komponenten Karosserie und Innenraum 301, Fahrzeugbewegung 302, Bordnetz 303 und Antriebsstrang 304 sein, oder sich in der Komponente Fahrzeug 300 selbst befinden.

Da sich ein erfindungsgemäßes Motormanagement in das Gesamtfahrzeugkonzept einfügen muß, ist es erforderlich die Komponente Fahrzeug 300 zu erstellen. Die weiteren Komponenten sind nach Verbrauchern, Resqurcen und Koordinationskomponenten aufgeteilt. Der Fahrzeugkoordinator 305 sammelt alle Anforderungen des gesamten Fahrzeugs und gibt sie zugeordnet zu den übrigen Komponenten weiter. In der Komponente Karosserie und Innenraum 301 sind für ein Motormanagement relevante Funktionseinheiten wie bestimmte Instrumente der Armaturen verankert. Dies sind z.B. Fehlerlampen, Verbrauchsanzeigen aber auch optional die Klimaanlage, mit der die Insassen direkt kommunizieren. In der Komponente Fahrzeugbewegung 302 sind alle Aufgaben verankert, die mit der Bewegung des Fahrzeugs in allen Richtungen zusammenhängen. Darunter sind der Fahrerwunsch und dessen Erfassung, FDR bzw. ESP, Bremse, ACC, usw. enthalten.

Im folgenden wird die Komponente Antriebsstrang 304 mit den zugehörigen Schnittstellen näher beschrieben. In dieser Komponente wird die nötige Energie z.B. für Nebenaggregate wie eine Klimaanlage oder die Umsetzung des Fahrerwunsches bereitgestellt. Die übrigen Komponenten werden ebenfalls soweit erforderlich weiter verfeinert. Einzelne Komponenten können je nach Ausführungsbeispiel als einzelne Steuergeräte oder in einem Steuergerät als einzelne Softwareblöcke oder als Mischung beider Ausgestaltungen realisiert sein. Die in Figur 3 verwendete Notation ist der Unified Modelling Language Notation nachempfunden, was bedeutet, daß die Blöcke 301 bis 304 Teil des Blockes Fahrzeug 300 sind. Diese Notation wird auch in den folgenden Figuren verwendet.

Figur 4a-d zeigt eine Verfeinerung der Komponenten aus Figur 3 mit einer Definition der Schnittstellen.

Figur 4a zeigt die Komponente Karosserie und Innenraum Block 301 und deren mögliche Aufteilung in weitere Komponenten 400 bis 403. Die Komponente Klimaanlage 401 beinhaltet die Klimaanlage (optional), die als Nebenaggregat und damit Verbraucher Forderungen wie Momenten- und Leerlaufdrehzahlforderungen an das Motormanagement hat. Daneben sind als weitere Verbraucher mit Block 400 die Komponente Komfortelektronik, wie Heizungsanlagen oder bestimmte Stellantriebe z.B. für Fensterheber oder Schiebedach sowie elektrische Sitzverstellung, etc. zusammengefaßt. Daneben sind ebenso mit Komponente 402 Telekommunikations- und Multimediaendgeräte wie Telefon, Radiofon, Computer, usw. denkbar. Daneben ist mit Block 403 noch eine Komponente Anzeigeelemente in Karosserie und Innenraum enthalten. Diese beinhaltet alle Anzeigen im Innenraum des Fahrzeugs, die mit dem Motormanagement zu tun haben, wie z.B. Diagnoselampen.

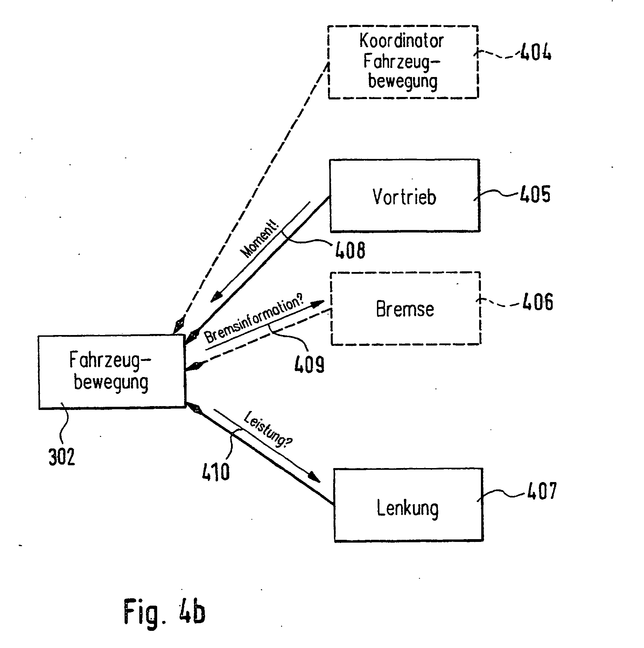

Figur 4b zeigt die Aufteilung der Komponente Fahrzeugbewegung 302. Dabei sind eine Komponente Vortrieb 405, Bremse 406 und Lenkung 407 vorgegeben. Optional kann sich die Komponente Bremse auch vereint mit der Komponente Vortrieb in einer Komponente als Vortrieb und Bremse wiederfinden. Der Koordinator Fahrzeugbewegung, Komponente 404 kann sich entweder auf der eingezeichneten Ebene befinden oder im Block 302, der Komponente Fahrzeugbewegung enthalten sein. Die Komponente Koordinator Fahrzeugbewegung dient als koordinierendes Element zur Verwaltung aller Verbraucher im Bereich Vortrieb, Bremse und Lenkung. Die Komponente Vortrieb 405 ist an der Physik orientiert und beinhaltet alle Funktionalitäten des Vortriebs, die das Motormanagement betreffen, wie z.B. das Fahrpedal oder eine Antriebsschlupfregelung. Aus der Komponente Vortrieb entsteht die Momentenanforderung bzw. Leistungsanforderung, welche beispielsweise durch den Fahrerwunsch bei Betätigen des Fahrpedals vorgebbar ist. Ebenso an der Physik orientiert ist die Komponente Bremse 406, die ihrerseits alle Funktionseinheiten der Bremse beinhaltet, die das Motormanagement betreffen, wie z. B. Bremspedal, ABS, usw.

Die Komponente Fahrzeugbewegung bzw. der Koordinator Fahrzeugbewegung fragt über Schnittstelle 409 Bremsinformationen, wie z.B. den Bremswunsch des Fahrers von der Komponente Bremse 406 ab. Die Komponenten Vortrieb 405 und Bremse 406 können optional auch zu einer Komponente zusammengefaßt werden. Eine weitere hier vorgesehene Komponente ist die Lenkung 407. Auch diese ist an der Physik orientiert und beinhaltet alle Funktionseinheiten der Lenkung, die das Motormanagement betreffen, wie z.B. die Servopumpe. Über eine Schnittstelle 410 wird dabei die, in der Komponente Lenkung 407 benötigte Leistung für z.B. die Servopumpe oder bei steer by wire abgefragt.

Generell sind in den Komponenten Vortrieb 405, Bremse 406 und Lenkung 407 neben den konventionellen Systemen auch z.B. elektrische Systeme denkbar, wie sie bereits im Stand der Technik bekannt sind. Dabei entfällt ein bisher üblicher mechanischer bzw. hydraulischer Durchgriff z.B. von Fahrpedal oder vom Bremspedal und statt dessen wird die jeweilige Vorgabe Vortrieb, Bremse und/oder Lenkung erfaßt, per z.B. elektrischem Signal weitergeleitet und im jeweiligem System eingestellt. Die bei Vortrieb (E-Gas), Bremse (brake by wire) oder Lenkung (steer by wire) benötigte Leistung bzw. Momenten- und/oder Drehzahlforderung an den Antrieb bzw. Motor wird dann durch das Motormanagement aufgenommen und bearbeitet.

Generell können in den Figuren Leistung und Moment als gleichbedeutende Größen gelten, da die Umrechnung der einen in die andere Größe unter Berücksichtigung der jeweiligen Drehzahlinformation für den Durchschnittsfachmann keine Schwierigkeit darstellt. Allerdings können bei der Leistungseinstellung über Moment und Drehzahl zwei Größen variiert werden.

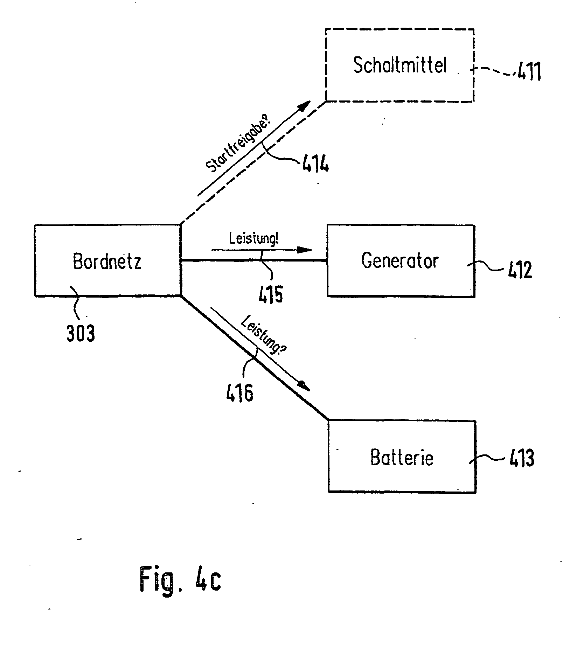

Figur 4c zeigt das Prinzip der Verfeinerung der Komponente Elektrisches Bordnetz 303. Die Aufgabe des elektrischen Bordnetzes ist die Bereitstellung elektrischer Leistung für die elektrischen Verbraucher des Kraftfahrzeugs. Zusätzlich besteht die Möglichkeit, durch das Bordnetz (über den Generator) eine mechanische Leistung einzustellen, in dem die Generatorerregung und damit die Aufnahme mechanischer Leistung gesteuert wird. In Sonderfällen ist sogar die Bereitstellung von mechanischer Leistung möglich, indem der Generator im motorischen Betrieb betrieben wird, indem er mechanische Leistung abgibt. Die Einstellung der mechanischen Aufnahmeleistung des Bordnetzes dient z. B. der Warmlaufunterstützung eines Verbrennungsmotors, wobei der Antrieb ein zusätzliches Lastmoment fordert und somit die Warmlaufphase abkürzt oder zur Aufbringung eines zusätzlichen Bremsmoments, z.B. auf Anforderung der Komponente Fahrzeugbewegung. Die mechanische Leistungsabgabe des Bordnetz kann als Boost des Antriebs benutzt werden. Somit deckt die Komponente Bordnetz 303 zusammen mit der Komponente Antriebsstrang 304 den gesamten Energiebedarf im Fahrzeug. Dabei kann durch ein geeignetes Motormanagement eine optimale Energieerzeugung und -verteilung erzeilt werden. Die Komponente Bordnetz 303 ist aufgeteilt in eine Komponente Schaltmittel 411, die optional vorgesehen ist und beispielsweise die Funktionseinheiten Zündschloß, Wegfahrsperre und in Zukunft unter Umständen einen automatischen Starter beinhaltet. Über Schnittstelle 414 wird vom Bordnetz 303 die Startfreigabe abgefragt. Statt der Abfrage der Startfreigabe wäre auch denkbar, daß die Komponente Schaltmittel im Startzeitpunkt ein Signal an die Komponente Bordnetz 303 übermittelt. Optional kann auch ein Koordinator elektrisches Bordnetz vorgesehen sein, der sich in Figur 4c aber in Block 303 Komponente Bordnetz befindet. Mit Komponente 412 ist in Figur 4c der Generator bezeichnet, welcher von Komponente Bordnetz 303 über Schnittstelle 415 eine Leistungsvorgabe erhält. Ist diese Leistungsvorgabe nicht erreichbar, meldet die Komponente 412 Generator einen Fehler zurück. Im Fehlerfall meldet das Bordnetz, daß die elektrische Leistung nicht aufgebracht werden kann, woraufhin der Fahrzeugkoordinator entscheidet, ob mehr vom Antriebsstrang gefordert wird oder Verbraucher abgeschaltet werden. Falls dies nicht ausreicht, wird mit vorherigem Warnlicht ein Liegenbleiben des Fahrzeugs akzeptiert. In Komponente 413 sind alle im Fahrzeug verwendeten Batterien zusammengefaßt. Somit umfaßt Komponente 413 die Funktionseinheit Batterie, die wenigstens eine Batterie enthält. Die Komponente Bordnetz 303 fragt über Schnittstelle 416 von Komponente 413 die Leistung ab. Der sich in Komponente 303 befindende Koordinator Bordnetz steuert die Bordnetzkomponenten, d.h. er legt die Strategie fest, wie die Anforderungen des Fahrzeugkoordinators an das Bordnetz umgesetzt werden können.

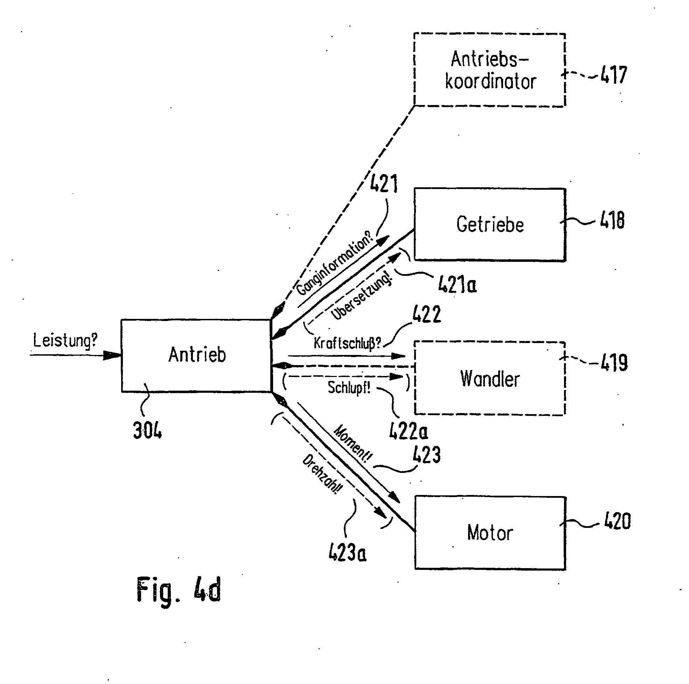

Figur 4d zeigt das Prinzip einer Verfeinerung der Komponente Antrieb 304. Die Aufgabe der Komponente Antrieb ist die Bereitstellung von mechanischer Leistung für verschiedene Verbraucher. Ein entsprechender Auftrag, hier speziell die Vorgabe der Leistung, wird vom Fahrzeugkoordinator bzw. von der Komponente Fahrzeug 300 erteilt. Die weitere Verfeinerung ergibt mit Komponente 417 dem Antriebskoordinator eine optionale Komponente, die sich auch in Komponente Antrieb 304 befinden kann. Daneben wird eine Komponente Getriebe 418 und eine Komponente Motor 420 unterschieden. Die Komponente Wandler 419 ist an dieser Stelle optional und beinhaltet normalerweise die Kupplung. Diese Funktionseinheit und damit die Komponente Wandler 419 könnte auch in der Komponente Getriebe 418 behandelt werden. Die Komponente Getriebe 418 beinhaltet daneben alle Funktionalitäten bzw. Funktionseinheiten, die mit dem Getriebe zusammenhängen, wie z.B. Übersetzung, Ganginformation, usw. An der Schnittstelle 421 zur Komponente Getriebe wird die Ganginformation abgefragt. Daneben wird an der Schnittstelle 422 zur Komponente Wandler 419 der Kraftschluß übertragen. Die Komponente Motor 420 beinhaltet die Funktionalität bzw. die Funktionseinheiten eines Verbrennungsmotors (Diesel oder Benzin) und/oder eines Hybrid- oder Elektromotors. Über die Komponente Motor wird die wesentliche Aufgabe gesteuert den Vortrieb bzw. Rücktrieb des Fahrzeugs zu ermöglichen. Neben dieser Hauptaufgabe sind Nebenaggregate zu betreiben. Diese werden jedoch nicht durch die Komponente Motor verwaltet. Die Forderungen an die Komponente Motor lassen sich auf wenige konkrete Einzelforderungen reduzieren. Dies sind die Darstellung eines Drehmoments, entweder absolut oder als Erhöhung bzw. Erniedrigung des aktuellen Moments, einen Wärmeausstoß, das Bereitstellen von Informationen über Betriebsdaten wie die Motordrehzahl, das aktuell zur Verfügung stehende Leistungsintervall und das aktuelle Getriebeeingangsmoment sowie das Starten und Abstellen. Von der Komponente Antriebsstrang 304 wird über Schnittstelle 423 ein Moment vorgegeben, welches von der Leistungsvorgabe an die Komponente Antriebsstrang 304 abhängt.

Dabei ist zu unterscheiden, an welcher Stelle die Leistung im Triebstrang abgegriffen wird. Die von den Nebenaggregaten aufgenommene Leistung wird beispielsweise bei Verbrennungsmotoren üblicherweise direkt an der Kurbelwelle abgegriffen, während die für den Vortriebszweck bereitgestellte Leistung über Wandler und Getriebe beeinflußt wird. Aufgrund dieser zwei geteilten Leistungsvorgaben kann die Komponente Antriebsstrang 304 in einem bevorzugten Ausführungsbeispiel nun selbständig die Art und Weise festlegen, wie der Auftrag zur Leistungsbereitstellung am Besten zu erfüllen ist. Hierunter ist die Auswahl einer geeigneten Momenten-Drehzahl-Kombination des Motors sowie der entsprechenden Getriebeübersetzung zu verstehen. Dazu wird in diesem bevorzugten Ausführungsbeispiel dem Getriebe mit Schnittstelle 421a eine vorgebbare Übersetzung eingegeben, der Komponente Wandler 419 über Schnittstelle 422a, ein vorgebbarer Schlupf sowie der Komponente Motor 420 über Schnittstelle 423a eine Drehzahl. Dabei können verschiedenste Strategien zur Anwendung kommen, wie etwa eine Optimierung nach Verbrauch und/oder Geräusch und/oder Fahrkomfort usw. Auch eine Kombination der unterschiedlichen Kriterien ist denkbar. Diese Strategieauswahl ist in dieser Detaillierung der Komponente Antriebsstrang 304 Aufgabe des Antriebskoordinators 417, welcher optional in der, in Figur 4d dargestellten Ebene oder in der Komponente Antriebsstrang 304 selbst beinhaltet ist. Der Antriebskoordinator 417 beschafft sich durch Abfragen die benötigten Informationen, die je nach verwendeter Strategie unterschiedlich sein können. Die benötigten Informationen setzen sich beispielsweise aus Umweltgrößen und/oder Fahrzustandsgrößen und/oder Fahrzeuggrößen und/oder Benutzergrößen zusammen. Damit bleibt die gesamte restliche Struktur unabhängig von der Strategie selbst. Es ist lediglich zu gewährleisten, daß die vom Antriebskoordinator 417 benötigten Informationen bereitgestellt werden. Diese Informationen können bei den übrigen Komponenten abgefragt werden, also beispielsweise bei den Komponenten der selben Detaillierungsebene (Motor 420, Wandler 419, Getriebe 418) und/oder aus übergeordneten Ebenen (vgl. Fig. 3). Nach Auswertung der abgefragten Informationen ermittelt der Antriebskoordinator 417 die passenden Vorgaben für die kooperativen Komponenten Motor 420, Wandler 419 und Getriebe 418. Das Getriebe hat beispielsweise über die Schnittstelle 421a die Vorgabe eine bestimmte Übersetzung zu realisieren, der Wandler 419 erhält die Vorgabe über Schnittstelle 422a einen bestimmten Schlupf einzustellen und die Komponente Motor 420 erhält ihrerseits die Vorgabe an ihrem Ausgang ein bestimmtes Moment bei einer bestimmten Kurbelwellendrehzahl über Schnittstelle 423 und 423a bereitzustellen. Als Randbedingungen der Motormomentenschnittstelle werden zusätzlich beispielsweise eine Vorhalteforderung sowie Anforderungen für Selbstschutz und Dynamik schon auf dieser Ebene definiert. Erst innerhalb der Komponente Motor 420 wird festgelegt auf welche Weise die Vorgaben erfüllt werden. Da dies beispielsweise bei Benzin- und Dieselmotoren sehr unterschiedlich erfolgt, werden hierfür verschiedene Varianten der Komponente Motor erforderlich. Deren Struktur wird nach den jeweiligen Erfordernissen verfeinert, bis letztlich die Beauftragung der jeweils vorhandenen Stelle erfolgen kann. Dies erfolgt beim Benzinmotor beispielsweise über Luft- und Einspritzmenge sowie den Zündwinkel, beim Dieselmotor beispielsweise über Einspritzmenge und -verlauf, sowie für beide Arten von Verbrennungsmotoren, eventuell durch weitere Größen wie Abgasrückführung, Ladedruck, usw.

Dazu ist in Figur 5a eine weitere Verfeinerung der Komponente Motor 420 dargestellt. Figur 5a bis c behandelt dabei speziell die Komponente Motor in einem Dieselmanagement. Dabei ist mit Komponente 500 ein Motorkoordinator vorgesehen, der die Aufgabe hat, die Vorgaben an den Motor zu verteilen und den Betrieb des Motors zu überwachen. Dazu kann diese Komponente 500 auch optional in der Komponente Motor 420 lokalisiert sein. Die Komponente Luftsystem 501 hat die zentrale Aufgabe Informationen über die aktuell zur Verfügung stehende Luftmasse zu liefern und im Rahmen seiner Einflußmöglichkeiten auf das System, eine gewünschte Soll-Luftmasse einzustellen. Dazu wird über Schnittstelle 513 die Luftmasse abgefragt. Das Abfragen der Rauchgrenze, ebenfalls über Schnittstelle 513 kann optional z.B. auch über den Motoroptimierer durchgeführt werden, worin die Rauchgrenze ebenfalls bestimmt werden kann. Die Vorgaben und Abfragen bezüglich Luftsystem 501 sind so, daß Abgasemissionen und Verbrauch möglichst gering gehalten werden. Dazu fragt die Komponente Luftsystem 501 ihrerseits über Schnittstelle 512 die Drehzahlinformation ab. Auch die Information der Einspritzmenge wird von Komponente 501 Luftsystem über Schnittstelle 514 aus der Komponente 502 dem Einspritzsystem abgefragt. Das Einspritzsystem seinerseits erhält über Schnittstelle 510 die Drehzahlinformation und über Schnittstelle 511 eine Momentenvorgabe. Die Komponente Einspritzsystem 502 beinhaltet die Einspritzanlage einschließlich seines mechanischen Antriebs und den Düsen. Weil die Rückwirkung des Brennraums bzw. der Brennräume auf das Einspritzsystem (Abschlußwiderstand der Düsen) gering ist, werden die Düsen zum Einspritzsystem gerechnet. Die Aufgabe des Einspritzsystems 502 ist es, die Einspritzmasse in Abhängigkeit des Kurbelwellenwinkels zu realisieren. Dazu werden Parameter angegeben, die für den Einspritzverlauf charakteristisch sind. Dies sind im einzelnen die Einspritzmasse während der Einspritzung (Integral über den Einspritzverlauf) und der Spritzbeginn. Statt der Vorgabe der Parameter wäre es auch denkbar, den Einspritzverlauf frei zu wählen. Neben der Komponente Einspritzsystem 502 ist mit der Komponente Einspritzregelung 503 eine Komponente vorgegeben, die das geforderte Moment in Abhängigkeit eines von außen vorgegebenen Optimierungskriteriums realisiert. Optional könnte die Komponente Einspritzregelung 503 auch in der Komponente 502 Einspritzsystem lokalisiert sein. Die Komponente Motoroptimierer 508 könnte sich ebenso optional wie die Komponente Motorkoordinator 500 in der Komponente Motor 420 befinden. Der Motoroptimierer, Komponente 508 ist nicht zwingend erforderlich, er bringt aber eine Verbesserung der Ergebnisse. Die Komponente Motoroptimierer 508 hat die Aufgabe das Optimierungskriterium zu bestimmen unter dem das Motormoment realisiert wird. Dabei kommen als Optimierungskriterien der Verbrauch, die Emissionen, Wärme und Dynamik in Frage. Beim Verbrauchskriterium gilt es das geforderte Motorausgangsmoment mit möglichst kleiner Kraftstoffmenge zu realisieren. Das Emissionskriterium bedeutet, daß das geforderte Motorausgangsmoment mit möglichst geringen Emissionen zu realisieren ist. Daß das geforderte Motorausgangsmoment unter möglichst großer Wärmeerzeugung realisiert wird, ist mit dem Wärmekriterium genannt. Beim Dynamikkriterium gilt es das geforderte Motorausgangsmoment mit möglichst großer, dynamisch abrufbarer Momentenreserve zu realisieren. Als weitere Komponente ist die Motormechanik 504 anzusehen. Über Schnittstelle 509 wird von dieser die Drehzahl abgefragt. Ebenso werden Begrenzungen beispielsweise zum Motorschutz, wie Drehzahlbegrenzung oder wenigstens eine Temperaturgrenze über diese Schnittstelle abgefragt. Die Aufgaben der Komponente Motormechanik 504 sind die Berechnung des Motorschleppmoments, der Schutz vor mechanischer Überlastung (Drehmomentbegrenzung und Drehzahlbegrenzung durch Bildung eines Grenzmoments), Einhaltung einer Brennraumtemperaturgrenze, Sicherstellung der Schmierung der Motormechanik durch das Grenzmoment, Vermeidung von Momentensprüngen, um die Lärmemissionen möglichst klein zu halten, Bestimmung der Motordrehzahlen und einer zugehörigen Fehlerinformation (Schwere des Fehlers), Bestimmung des Kurbelwellenwinkels und einer zugehörigen Fehlerinformation (Schwere des Fehlers) und die Bestimmung der Motortemperatur bzw. Kühlwassertemperatur. Für die Komponenten Startsystem 505, Glühsystem 506 und Kraftstoffsystem 507 gilt, daß diese optional auch in der Komponente Motormechanik 504 liegen können. Die Aufgabe der Komponente Startsystem 505 besteht im Einschalten des Elektromotors zum Starten des Hauptmotors und im Abschalten des Elektromotors, wenn der Hauptmotor angesprungen ist. Außerdem ist sie für der Starterschutz verantwortlich. Die Komponente Glühsystem 506 beinhaltet die Funktion des Glühens bei Dieselmotoren. In der Komponente Kraftstoffsystem 507 sind Teile der Kraftstoffzufuhr wie z.B. der Kraftstofftank lokalisiert. Die Komponente 507 ist nicht zwingend erforderlich und kann ganz weggelassen werden.

Wesentliche Komponenten sind u.a. Motormechanik 504 und Luftsystem 501, welche in den Figuren 5b und 5c dargestellt werden.

Eine vorteilhafte Ausgestaltung zeigt Figur 5b durch das Prinzip der Verfeinerung der Komponente Luftsystem 501. Dabei erhält man eine Komponente Luftsystemkoordinator 600, eine Komponente Ansaugtrakt 601 und eine Komponente Abgastrakt 602. In einem anderen Ausführungsbeispiel können diese drei Komponenten 600, 601 und 602 auch direkt in der Komponente Luftsystem 501 lokalisiert sein. Die Komponente Ansaugtrakt 601 umfaßt den physikalischen Ansaugbereich von der Umgebungsluft bis zu den Einlaßventilen. Die Komponente Abgastrakt 602 beinhaltet den physikalischen Bereich zwischen den Auslaßventilen und dem Auspuffende. Die Komponence Luftsystemkoordinator 600 schließlich dient als koordinierende Komponente des Luftsystems und beinhaltet die Aufgaben der Abgasrückführregelung (ARF) sowie der Drosselklappenregelung.

Die Komponenten der Verfeinerung der Komponente Motormechanik 504 in Figur 5c sind selbst erklärend und beinhalten die Aufgaben, die zu ihren physikalischen Komponenten gehören. In Komponente 603 wird die Drehzahlerfassung durchgeführt und diese Drehzahl über Schnittstelle 608 abgefragt. Optional aber nicht zwingend ist die separat aufgeführte Komponente Brennräume 607 bei Verbrennungsmotoren. Des weiteren können die beiden Komponenten Kühlsystem 604 und Motormechanikschutz 605 in einer Komponente Motorschutz 606 zusammengefaßt werden. Aus dieser Komponente Motorschutz 606 werden dann über Schnittstelle 609 die schon vorher erwähnten Begrenzungen abgefragt. Die Komponente Drehzahlerfassung 603 beinhaltet beispielsweise weiterhin Komponenten wie Nockenwelle und Kurbelwelle in denen jeweils die zugehörige Drehzahl erfaßt und verarbeitet bzw..aufbereitet wird.

Neben der bisher dargestellten Verfeinerung der Komponente Motor 420 im Bezug auf eine Dieselbrennkraftmaschine kann ebenfalls eine Verfeinerung dieser Komponente Motor 420 in Bezug auf einen Benzinverbrennungsmotor angegeben werden. Dazu dient die Verfeinerung dieser Komponente Motor 420 in Figur 6. In diesem Ansatz ist zur Strukturierung des Benzinmotormanagements wieder optional ein Koordinator Motor, Komponente 600 enthalten. Dieser Motor Koordinator 600 kann wie im Dieselmanagement entweder auf der motorunterlagerten Verfeinerungsebene oder in der Komponente Motor 420 selbst lokalisiert sein. Über Schnittstelle 615 wird dem Motorkoordinator 600 ein Moment vorgegeben. Andererseits fragt der Koordinator Motor 600 über Schnittstelle 620 die Drehzahl, Wirkungsgrade und die Füllung ab. Je nachdem, wo der Koordinator Motor 600 lokalisiert ist, gehen die weiteren Schnittstellen entweder von der Komponente Motor 420, wenn die Komponente Motorkoordinator 600 in Motor 420 realisiert ist, oder von der Komponente Motorkoordinator 600 aus, wenn diese als separate Komponente Verwendung findet. Die Komponente 601 Luftsystem umfaßt den Ansaugtrakt mit Sensoren und Stellern. Zu den Stellern gehören neben Drosselklappe gegebenfalls Saugrohrumschaltung, beispielsweise Nockenwellensteller, die Ein- und Auslaßventile, Turbolader und/oder AGR-System. Die Aufgaben der Komponente Luftsystem 601 sind das Erfassen der aktuell zur Verfügung stehenden Luftmasse (Füllung) und das Einstellen einer angeforderten Füllung mit den verfügbaren Füllungsstellern. Dazu fragt die Komponente Luftsystem 601 von der Komponente Motor 420 und/oder der Komponente Motorkoordinator 600 über Schnittstelle 612 die Drehzahl ab. Daneben wird über Schnittstelle 619 aus dem Luftsystem die Füllung abgefragt. Diese Information steht dann weiteren Komponenten wie Einspritzsystem 602 und/oder Zündsystem 606 zur Verfügung. Andererseits wird über Schnittstelle 613 der Komponente Luftsystem 601 die jeweilige Betriebsart sowie ein Füllungssollwert vorgegeben. Die Komponente 602 Einspritzsystem fragt über Schnittstelle 610 den aktuellen Drehzahlwert sowie die aus dem Luftsystem gewonnene Information der Füllung ab. Über Schnittstelle 611 erhält das Einspritzsystem wiederum die Betriebsartvorgabe und darüber hinaus eine Gemischzusammensetzung, das Verhältnis Kraftstoff zu Luft abgekürzt durch Lambda. Die Aufgabe des Einspritzsystems liegt in der Bestimmung des Kraftstoffbedarfs für eine angeforderte Gemischzusammensetzung (Lambda) und Betriebsart, der Regelung der Gemischzusammensetzung (Lambda), der Berechnung der Einspritzzeit und -lage sowie der Realisierung des Gemisches durch Ansteuerung der Einspritzventile. Als weitere Komponente ist mit 606 das Zündsystem aufgeführt. Diese Komponente 606 fragt über Schnittstelle 616 die aus der Motormechanik gewonnene Drehzahlinformation sowie die aus dem Luftsystem gewonnene Füllungsinformation ab. Andererseits erhält sie über Schnittstelle 615 wiederum die Betriebsartvorgabe und die Vorgabe des Wirkungsgrades. Die Komponente Zündsystem 606 umfaßt die jeweiligen Funktionseinheiten Brennraum und Zündanlage. Die Aufgaben sind die Entflammung und Verbrennung im Brennraum, die Funktionen zur Bestimmung des Zündwinkels, die Bereitstellung von Zündenergie (Schließzeit), die Realisierung des Zündfunkens, die Klopferkennung und Regelung, die Aussetzerkennung, die Brennraumdruckerfassung und/oder die Messung des Ionenstroms zur Einstellung des Verbrennungsverlaufs. Als weitere Komponente ist mit 607 das Kraftstoffsystem gegeben. Diese erhält über Schnittstelle 617 die Vorgabe der Betriebsart und des Raildrucks. Die Komponente Kraftstoffsystem 607 enthält Teile der Kraftstoffzufuhr, wie Tank, Tankentlüftungsventil, Kraftstoffpumpe, Fuel-Rail und hat die Aufgaben, der Steuerung und Diagnose der Einzelkomponenten wie z.B. EKP-Ansteuerung, Tankentlüftung, Tankentlüftungsdiagnose, Tankfüllstandsmessung und Raildruckregelung. Die Komponente Abgassystem 603 erhält über Schnittstelle 618 lediglich die Vorgabe der Betriebsart. Die Komponente Abgassystem umfaßt Funktionseinheiten zur Abgasnachbehandlung, wie z.B. Sekundärluftsystem, einen Abgastemperatursensor zur Abgastemperaturregelung und den Katalysator, damit verbunden DENOX, Katalysator ausräumen und/oder Entschwefelung. Als weitere wesentliche Komponente ist mit 604 die Motormechanik angegeben. Aus dieser wird über Schnittstelle 614 die Drehzahlinformation, Temperaturinformation und die Kurbel- und/oder Nockenwellenposition abgefragt. Zustandsgrößen der Komponente Motormechanik sind Positionen der Kurbel- und/oder Nockenwelle über Positionssensoren sowie die Motordrehzahl, darüber hinaus eine Motortemperatur und/oder das erfaßte Motorschleppmoment. Als Begrenzungen sind Drehzahl- und Momentbegrenzung vorgesehen. Optional, also nicht zwingend erforderlich, sind die Komponenten 605, 608 und 609. Die Komponente 605 Startsystem beinhaltet die Funktionseinheit Starter. Die Aufgabe der Komponente 605 ist die Herstellung der Betriebsbereitschaft durch die Steuerung des Starters, der Starterschutz sowie der Automatikstart. Optional kann der Starter bzw. die Komponente Startsystem 605 auch in der Antriebsstrangkomponente 304 angesiedelt werden. Das Überwachungssystem, Komponente 608 hat die Aufgabe, unzulässige bzw. gefährliche Motorzustände zu erkennen. Dies geschieht durch Plausibilisierung von Soll- und Istgrößen sowie die Berechnung zulässiger Werte. Daneben führt die Komponente 608 Eingriffe zur Gewährleistung eines sicheren Zustands bei Überschreitung der zulässigen Werte durch. Die Komponente Motordiagnosesystem 609 schließlich hat die Aufgabe die Funktionsfähigkeit des Motors und seiner Komponenten zu prüfen, sowie Fehlerinformationen der einzelnen Komponenten zu sammeln und zu verwalten. Die optionale Komponente Motorkoordinator 600 hat die Aufgabe ausgehend von den gesamten Motorkomponenten die Motorbetriebsart nach unterschiedlichen Kriterien zu bestimmen. Diese Kriterien können z.B. Sicherheit und/oder Emissionen und/oder Verbrauch und/oder Komfort sein. Beliebige Kombinationen bzw. Gewichtungen der einzelnen Kriterien zur Bestimmung der Motorbetriebsart sind denkbar. Darüber hinaus werden in Komponente Motorkoordinator 600 die Aufträge auf die möglichen Stelleingriffe (Füllung, Gemisch, Zündung) unter Berücksichtigung der genannten inneren Randbedingungen (Begrenzungen) verteilt.

Ein weiteres Ausführungsbeispiel zeigt in Figur 7 unter Berücksichtigung der Leistungs- bzw. Momenten- und Drehzahlvorgaben allgemein für die Komponente Motor 420, also unabhängig vom jeweiligen Motortyp, die Umsetzung eines Fahrerwunsches und anderer Einflußgrößen in Vorgaben für die Komponente Motor 420. Der Fahrerwunsch ist als Drehzahl- und/oder Momentenvorgabe bzw. Leistungsvorgabe Teil der Komponente Vortrieb 405. Ebenfalls in der Komponente Vortrieb 405 ist eine weitere Momentenvorgabe aus der Fahrgeschwindigkeitsregelung vorgesehen. Die Fahrstabilitätsregelung (ASR, MSR, ESP), hier im Koordinator Fahrzeugbewegung 404 lokalisiert gibt ihrerseits über Schnittstelle 704 ein Moment KF vor. Wird statt der Fahrstabilitätsregelung eine adaptive Fahrstabilitätsregelung (ACC) eingesetzt, so erfolgt die Vorgabe nicht nur an den Vortrieb 405, sondern auch an die Komponente Bremse 406, welche dann aber in einer Komponente Vortrieb und Bremse zusammengelegt sein können. Daraus würden sich dann veränderte Vorgaben an die Komponente Vortrieb und Bremse ergeben. Aus diesen internen und externen Vorgaben bildet die Komponente Vortrieb 405 ihrerseits eine Momenten- und Drehzahlvorgabe an den Fahrzeugkoordinator 305. Über Schnittstelle 705 wird ein Moment V und eine Drehzahl V an die Komponente 305 Fahrzeugkoordinator übermittelt. Komponente 404 und 405 sind, wie in Figur 4b erläutert, Teil der Komponente Fahrzeugbewegung 302. Diese Komponente 302 wiederum ist u.a. neben der Komponente 305, der Komponente Antriebsstrang 304 und den Nebenaggregaten 706 Teil der Komponente Fahrzeug 300. Dabei sind der Übersichtlichkeit halber in Komponente 706 in Figur 7 alle Nebenaggregate wie Klimaanlage, Servopumpe, etc. der übrigen Komponenten zusammengefaßt. Diese Nebenaggregate haben in Summe über Schnittstelle 703 eine Momenten- (Moment NA) und eine Drehzahl- (Drehzahl NA) bzw. Leistungsvorgabe an die Komponente Fahrzeugkoordinator 305. Diese Komponente 305 bildet aus den Vorgaben eine Drehzahl- (Drehzahl F) und eine Momenten- (Moment F) Vorgabe, wobei eine weitere Momentenvorgabe (Moment N) abgeleitet aus den Nebenaggregaten vorgesehen ist. Über die Komponente Antriebsstrang 304 sowie die Schnittstellen 702 und 707 werden diese Vorgaben an den Koordinator Antriebsstrang 417 durchgereicht. Unter Einbeziehung weiterer Leistungsvorgaben über Schnittstelle 701 in Form von Moment G und Drehzahl G aus Komponente Getriebe 418 bildet der Koordinator Antriebsstrang 417 in diesem Ausführungsbeispiel die Leistungsvorgabe an die Komponente Motor 420. Dazu wird über Schnittstelle 700 ein Moment KA und eine Drehzahl KA als Vorgabe an Komponente 420 übermittelt.

Mit dieser hier in den Figuren dargestellten Komponenten-Struktur ist man auch offen für weitere Entwicklungen im Motor- und/oder Getriebemanagement, wie z.B. bei Hybrid- oder Elektromotoren als Hauptantrieb im Fahrzeug, welche dann analog zu den hier vorgestellten Benzin- oder Dieselbrennkraftmaschinen erfaßt und gesteuert werden können.

Mit der in der vorliegenden Offenbarung gemachten Definition der Schnittstelle bzw. der Schnittstellen, welche den einzelnen Komponenten zugeordnet sind, ist eine symbolische Zuordnung der ausgetauschten Daten bzw. Informationen mit der jeweiligen Kommunikationsart (Vorgabe und/oder Abfrage) gegeben. Die Anzahl und/oder Ausgestaltung dieser Schnittstellen ist nicht als Indiz für tatsächliche in Hardware repräsentierte Interfacebausteine anzusehen. Vielmehr erlaubt die gemachte Definition eine flexible Aufteilung und/oder Zuordnung realer, hardwaremäßiger und/oder physikalischer Schnittstelleninformationen zu einzelnen symbolischen Schnittstellen und damit zu den einzelnen Komponenten.

## Patentansprüche

1. Computersystem, mit wenigstens einem Prozessor und wenigstens einem Speicher zur Steuerung einer Antriebseinheit eines Fahrzeugs, wobei das Fahrzeug als Gesamtsystem aus Funktionseinheiten (104, 108) besteht, die die Funktionen des Fahrzeugs durchführen, wobei das Gesamtsystem Fahrzeug gleichzeitig eine erste Komponente (300) des Computersystems darstellt und das Computersystem derart ausgebildet ist, daß das Gesamtsystem Fahrzeug, in verschiedene, vorgebbare Komponenten (304, 420, 502) aufgeteilt wird, welche die Funktionseinheiten umfassen und zwischen den Komponenten (420, 502) Schnittstellen (610, 611) vorgesehen sind, über welche Daten zwischen den Komponenten ausgetauscht werden und die Komponenten (300, 304, 420, 502) und deren Schnittstellen (423, 423a, 510, 511) in dem Computersystem, in dem wenigstens einen Speicher programmiert bzw. abgelegt werden,so dass das Fahrzeug in eine Steuerungsstruktur aus softwaregenerierten Komponenten in dem Computersystem abgebildet wird, wobei die Antriebseinheit des Fahrzeugs wenigstens eine Funktionseinheit (100, 212) umfaßt und als eine zweite Komponente (304, 420) im Computersystem vorgegeben wird, und die Steuerung der Komponente Antriebseinheit (304) durch Vorgaben (423, 511) und Abfragen (509, 513) von Daten über entsprechende Schnittstellen erfolgt, die mit der zweiten Komponente in Verbindung stehen, wobei wenigstens eine dritte Komponente (303) vorgesehen ist, bei der wenigstens eine Funktionseinheit außerhalb der Antriebseinheit liegt, **dadurch gekennzeichnet, dass** die Antriebseinheit auch abhängig von der wenigstens einen dritten Komponente (303) bei der wenigstens eine Funktionseinheit außerhalb der Antriebseinheit liegt und/oder den an den entsprechende Schnittstellen ausgetauschten Daten, die mit der dritten Komponente in Verbindung stehen, gesteuert und verwaltet wird.

2. Computersystem nach Anspruch 1, **dadurch gekennzeichnet, daß** die erste Komponente (300) wenigstens in die weiteren Komponenten Karosserie und Innenraum (301), Fahrzeugbewegung (302), Bordnetz (303), und Antriebsstrang (304) mit weiteren Schnittstellen unterteilt wird.

3. Computersystem nach Anspruch 2, **dadurch gekennzeichnet, daß** die Komponente Karosserie und Innenraum (301) wenigstens in die weiteren Komponenten Klimaanlage (401), falls diese als Funktionseinheit vorhanden ist und Anzeigeelemente (403) mit weiteren Schnittstellen oder in die weiteren Komponenten Klimaanlage (401), falls diese als Funktionseinheit vorhanden ist, Anzeigeelemente (403), Komfortelektronik (400) und Telekommunikation und Multimedia (402) mit weiteren Schnittstellen unterteilt wird.

4. Computersystem nach Anspruch 2, **dadurch gekennzeichnet, daß** die Komponente Fahrzeugbewegung (302) in wenigstens eine der weiteren Komponenten Vortrieb (405), Bremse (406), Lenkung (407) und Koordinator Fahrzeugbewegung (404) mit Schnittstellen zur Momentenvorgabe (408) und/oder Bremsinformationsabfrage (409) und/oder Leistungsabfrage (410) unterteilt wird.

5. Computersystem nach Anspruch 2, **dadurch gekennzeichnet, daß** die Komponente Bordnetz (303) wenigstens in die weiteren Komponenten Generator (412) mit einer Schnittstelle zur Leistungsvorgabe (415), Batterie (413) mit einer Schnittstelle Leistungsabfrage (416) oder in die weiteren Komponenten Generator (412) mit einer Schnittstelle zur Leistungsvorgabe (415), Batterie (413) mit einer Schnittstelle Leistungsabfrage (416) und Schaltmittel (411) mit einer Schnittstelle zur Abfrage Starfreigabe (414) unterteilt wird.

6. Computersystem nach Anspruch 2, **dadurch gekennzeichnet, daß** die Komponente Antriebsstrang (304) in wenigstens eine der weiteren Komponenten Getriebe (418), Motor (420) und Wandler (419) mit weiteren Schnittstellen zur Abfrage von Kraftschluß (421), Ganginformation (422) und zur Vorgabe eines Moments (423) oder in die weiteren Komponenten Getriebe (418), Motor (420), Wandler (419) und Antriebsstrangkoordinator (417) mit Schnittstellen zwischen der Komponente Antriebskoordinator (417) und den weiteren Komponenten zur Vorgabe von Übersetzung (421a), Schlupf (422a), Drehzahl (423a) und Moment (423) unterteilt wird, wobei die Komponente Antriebsstrang (304) eine Leistung als Vorgabe erhält.

7. Computersystem nach Anspruch 6, **dadurch gekennzeichnet, daß** die Komponente Motor (420) in wenigstens eine der weiteren Komponenten Motormechnanik (504) mit einer Schnittstelle zur Abfrage von Drehzahl und/oder Begrenzungen (509), Einspritzsystem (502) mit Schnittstellen zur Abfrage von Drehzahl (510) und/oder Momentenvorgabe (511) und Luftsystem (501) mit Schnittstellen zur Abfrage von Drehzahl (512) und/oder Einspritzmenge (514) und/oder Luftmasse (513) und bei Dieselbrennkraftmaschinen, Rauchgrenze (513), unterteilt wird.

8. Computersystem nach Anspruch 6, **dadurch gekennzeichnet, daß** die Komponente Motor (420) insbesondere bei Benzinbrennkraftmaschinen in wenigstens einer der weiteren Komponenten Motormechnanik (604) mit einer Schnittstelle (614) zur Abfrage von Drehzahl, Position und/oder Temperatur, Abgassystem (603) mit einer Schnittstelle zur Vorgabe wenigstens einer Betriebsart (618), Kraftstoffsystem (607) mit einer Schnittstelle (617) zur Vorgabe wenigstens einer Betriebsart und/oder Raildrucks, Einspritzsystem (602) mit einer Schnittstelle zur Vorgabe (611) wenigstens einer Betriebsart und/oder Gemischzusammensetzung (Lambda) und einer Schnittstelle zur Abfrage (610) von Füllung und/oder Drehzahl, Zündsystem (606) mit einer Schnittstelle zur Vorgabe (615) wenigstens einer Betriebsart und/oder Wirkungsgrad und einer Schnittstelle zur Abfrage (616) von Füllung und/oder Drehzahl, Luftsystem (601) mit Schnittstellen zur Abfrage von Drehzahl (612) und/oder Füllung (619) und/oder einer Schnittstelle zur Vorgabe (613) wenigstens einer Betriebsart und/oder eines Füllungssollwertes sowie Motorkoordinator (600) mit einer Schnittstelle zur Abfrage (620) von Drehzahl, Wirkungsgrad und/oder Füllung und/oder einer Schnittstelle zur Momentenvorgabe (615) unterteilt wird, wobei, für den Fall, daß der Motorkoordinator (600) außerhalb der Komponente Motor (420) lokalisiert ist, dieser sich zwischen der Komponente Motor (420) und den übrigen Komponenten, in welche die Komponente Motor (420) unterteilt ist, befindet.

9. Computersystem nach Anspruch 7 oder 8, **dadurch gekennzeichnet, daß** die Komponente Motormechanik (504) in wenigstens eine der weiteren Komponenten Drehzahlerfassung (603) mit einer Schnittstelle zur Drehzahlabfrage (608) und/oder Motorschutz (605) mit einer Schnittstelle zur Begrenzungsabfrage (609) unterteilt ist und/oder die Komponente Luftsystem (501) wenigstens in die Komponenten Ansaugtrakt (601) und Abgastrakt (602) unterteilt wird.

10. Computersystem nach wenigstens einem der vorhergehenden Ansprüche, **dadurch gekennzeichnet, daß** die Antriebseinheit als Komponente Motor (420) abhängig von vorgegebenen Komponenten Koordinator Fahrzeugbewegung (404) mit Momentenvorgabe (704), Vortrieb (405) mit Drehzahl- und/oder Momentenvorgabe (705), Nebenaggregate (706) mit Drehzahl- und/oder Momentenvorgabe (703), Fahrzeugkoordinator (305) mit wenigstens einer Momenten- und/oder Drehzahlvorgabe (702), Getriebe (418) mit Drehzahl- und/oder Momentenvorgabe (701) und Koordinator Antriebsstrang (417) mit Drehzahl- und/oder Momentenvorgabe (700), gesteuert wird.

## Claims

1. Computer system having at least one processor and at least one memory for controlling a drive unit of a vehicle, wherein the vehicle is composed, as a composite system, of functional units (104, 108) which carry out the functions of the vehicle, wherein the composite system of the vehicle at the same time constitutes a first component (300) of the computer system and the computer system is embodied in such a way that the composite system of the vehicle is divided into various predefinable components (304, 420, 502) which comprise the functional units, and interfaces (610, 611) are provided between the components (420, 502) and data is exchanged between the components via said interfaces (610, 611), and the components (300, 304, 420, 502) and their interfaces (423, 423a, 510, 511) in the computer system, are programmed or stored in the at least one memory cell so that the vehicle is mapped into a control structure composed of software-generated components in the computer system, wherein the drive unit of the vehicle comprises at least one functional unit (100, 212) and is predefined as a second component (304, 420) in the computer system, and the component of the drive unit (304) is controlled by predefined values (423, 511) and interrogations (509, 513) of data via corresponding interfaces which are connected to the second component, wherein at least one third component (303) is provided in which at least one functional unit is located outside the drive unit, **characterized in that** the drive unit is controlled and managed as a function of the at least one third component (303) in which at least one functional unit is located outside the drive unit and/or the data which is exchanged at the corresponding interfaces which are connected to the third component.

2. Computer system according to Claim 1, **characterized in that** the first component (300) is divided at least into the further components of the bodywork and interior (301), vehicle movement (302), on-board power system (303) and drive train (304) with further interfaces.

3. Computer system according to Claim 2, **characterized in that** the component of the bodywork and the interior (301) is divided at least into the further components of the air-conditioning unit (401), if this is present as a functional unit, and display elements (403) with further interfaces, or into the further components of the air-conditioning unit (401), if this is present as a functional unit, display elements (403), comfort electronics (400) and telecommunication and multimedia (402) with further interfaces.

4. Computer system according to Claim 2, **characterized in that** the component of the vehicle movement (302) is divided into at least one of the further components of the proportion system (405), brake (406), steering system (407) and coordinator for vehicle movement (404) with interfaces for predefining torque values (408) and/or brake information interrogation means (409) and/or power interrogation means (410).

5. Computer system according to Claim 2, **characterized in that** the component of the on-board power system (303) is divided at least into the further components of the generator (412) with an interface to the means (415) for predefining power values, battery (413) with an interface to the power interrogation means (416), or into the further components of the generator (412) with an interface to the means (415) for predefining power values, battery (413) with an interface to the power interrogation means (416) and switching means (411) with an interface to the start enable interrogation means (414).

6. Computer system according to Claim 2, **characterized in that** the component of the drive train (304) is divided into at least one of the further components of the transmission (418), engine (420) and converter (419) with further interfaces to the power flux interrogation means (421), gear speed information means (422) and to means for predefining a torque (423), or into the further components of the transmission (418), engine (420), converter (419) and drive train coordinator (417) with interfaces between the component of the drive coordinator (417) and the further components for predefining transmission ratios (421a), slip (422a), rotational speed (423a) and torque (423), wherein the component of the drive train (304) receives a power as a predefined value.

7. Computer system according to Claim 6, **characterized in that** the component of the motor (420) is divided into at least one of the further components of the engine mechanics (504) with an interface to the means for interrogating the rotational speed and/or limitations (509), injection system (502) with interfaces to the means for interrogating a rotational speed (510) and/or torque predefining means (511) and air system (501) with interfaces to the means for interrogating rotational speed (512) and/or injection quantity (514) and/or air mass flow rate (513) and, in the case of diesel internal combustion engines, smoke limit (513).

8. Computer system according to Claim 6, **characterized in that** the component of the engine (420) is divided, in particular in petrol internal combustion engines, into at least one of the further components: engine mechanics (604) with an interface (614) to the means for interrogating rotational speed, position and/or temperature, exhaust gas system (603) with an interface to the means for predefining at least one operating mode (618), fuel system (607) with an interface (617) to the means for predefining at least one operating mode and/or rail pressure, injection system (602) with an interface to the means (611) for predefining at least one operating mode and/or mix composition (lambda) and an interface to the means (610) for interrogating the charge and/or rotational speed, ignition system (606) with an interface to the means (615) for predefining at least one operating mode and/or efficiency level and an interface to the means (616) for interrogating charge and/or rotational speed, air system (601) with interfaces to the means for interrogating rotational speed (612) and/or charge (619) and/or an interface to the means (613) for predefining at least one operating mode and/or one charge set point value and engine coordinator (600) with an interface to the means (620) for interrogating rotational speed, efficiency level and/or charge and/or an interface to the torque predefining means (615), wherein, if the engine coordinator (600) is located outside the component of the engine (420), said engine coordinator (600) is located between the component of the engine (420) and the other components into which the component of the engine (420) is divided.

9. Computer system according to Claim 7 or 8, **characterized in that** the component of the engine mechanics (504) is divided into at least one of the further components: means (603) for sensing the rotational speed with an interface to the means (608) for interrogating the rotational speed and/or engine protection means (605) with an interface to the limitation interrogation means (609), and/or the component of the air system (501) is divided at least into the components of the intake section (601) and exhaust section (602).

10. Computer system according to at least one of the preceding claims, **characterized in that** the drive unit is controlled as the component of the motor (420) as a function of the predefined components of the coordinator for vehicle movement (404) with torque predefining means (704), proportion means (405) with rotational speed and/or torque predefining means (705), secondary assemblies (706) with rotational speed and/or torque predefining means (703), vehicle coordinator (305) with at least one torque and/or rotational speed predefining means (702), transmission (418) with rotational speed and/or torque predefining means (701) and coordinator for the drive train (417) with rotational speed and/or torque predefining means (700).

## Revendications

1. Système d'ordinateur, comportant au moins un processeur et au moins une mémoire pour la commande d'une unité d'entraînement d'un véhicule,
qui en tant que système global, se compose d'unités de fonctionnement (104, 108) qui exécutent les fonctions dudit véhicule, et dans lequel le système global "véhicule" représente en même temps un premier composant (300) du système d'ordinateur, le système d'ordinateur est constitué de telle manière que le système global "véhicule" est divisé en divers composants pré-déterminables (304, 420, 502) qui englobent les unités de fonctionnement, entre les composants (420, 502) sont prévues des interfaces (610, 611) par l'intermédiaire desquelles des données sont échangées entre les composants, et les composants (300, 304, 420, 502) et leurs interfaces (423, 423a, 510, 511) sont programmés ou déposés dans le système d'ordinateur, à l'intérieur d'au moins une mémoire, de telle sorte que le véhicule est reproduit dans le système d'ordinateur sous la forme d'une structure de commande faite de composants générés par un logiciel,
l'unité d'entraînement du véhicule englobe au moins une unité de fonctionnement (100, 212), et est prédéterminée dans le système d'ordinateur en tant que second composant (304, 420), et la commande du composant "unité d'entraînement" (304) s'effectue au moyen de prédéterminations (423, 511) et d'interrogations (509, 513) sur les données par l'intermédiaire d'interfaces correspondantes qui se trouvent en liaison avec le second composant, et au moins un troisième composant (303) comporte au moins une unité de fonctionnement en dehors de l'unité d'entraînement,
**caractérisé en ce que**
l'unité d'entraînement est commandée et gérée également en fonction du troisième composant (303) (au nombre d'au moins un) dans lequel au moins une unité de fonctionnement se situe en dehors de l'unité d'entraînement, et/ou en fonction des données échangées aux interfaces correspondantes qui se trouvent en liaison avec le troisième composant.

2. Système d'ordinateur selon la revendication 1,
**caractérisé en ce que**
le premier composant (300) est divisé au moins en les autres composants additionnels : carrosserie et intérieur (301), mouvement du véhicule (302), réseau de bord (303) et ligne d'entraînement (304), avec d'autres interfaces.

3. Système d'ordinateur selon la revendication 2,
**caractérisé en ce que**
le composant carrosserie et intérieur (301) est divisé au moins en les autres composants : installation de climatisation (401) - pour autant que celle-ci est disponible en tant qu'unité de fonctionnement - et éléments d'affichage (403), avec des interfaces additionnelles ; ou en les composants additionnels : installation de climatisation (401) - pour autant que celle-ci est disponible en tant qu'unité de fonctionnement, éléments d'affichage (403), électronique de confort (400), télécommunication et multimédia (402), avec d'autres interfaces.

4. Système d'ordinateur selon la revendication 2,
**caractérisé en ce que**
le composant "mouvement du véhicule" (302) est divisé au moins en l'un des autres composants : propulsion (405), frein (406), direction (407) et coordinateur du mouvement du véhicule (404), avec des interfaces pour la prédétermination du couple (408) et/ou l'interrogation sur l'information de freinage (409) et/ou l'interrogation sur la puissance (410).

5. Système d'ordinateur selon la revendication 2,
**caractérisé en ce que**
le composant "réseau de bord" (303) est divisé au moins en les autres composants : générateur (412) avec une interface pour la prédétermination de puissance (415), et batterie (413) avec une interface pour l'interrogation sur la puissance (416) ; ou en les autres composants : générateur (412) avec une interface pour la prédétermination de puissance (415), batterie (413) avec une interface pour l'interrogation sur la puissance, et dispositifs de commutation (411) avec une interface pour l'interrogation (416) sur le déblocage de démarrage (414).

6. Système d'ordinateur selon la revendication 2,
**caractérisé en ce que**
le composant "ligne d'entraînement" (304) est divisé en au moins l'un des autres composants : boîte de vitesse (418), moteur (420) et convertisseur (419), avec des interfaces additionnelles pour l'interrogation sur la fermeture de force (421) et l'information de rapport de vitesse (422) et pour la prédétermination d'un couple (423) ; ou en les autres composants : boîte de vitesse (418), moteur (420), convertisseur (419) et coordinateur de ligne d'entraînement, avec des interfaces entre le composant "coordinateur d'entraînement" (417) et les autres composants en vue de la prédétermination de la démultiplication (421a), du glissement (422a), de la vitesse de rotation (423a) et du couple (423), le composant "ligne d'entraînement" (304) recevant une puissance en tant que prédétermination.

7. Système d'ordinateur selon la revendication 6,
**caractérisé en ce que**
le composant "moteur" (420) est divisé en au moins un des autrse composants : mécanique du moteur (504) avec une interface pour l'interrogation sur la vitesse de rotation et/ou les limitations (509) ; système d'injection (502) avec des interfaces pour l'interrogation sur la vitesse de rotation (510) et/ou la prédétermination du couple (511) ; et système d'air (501) avec des interfaces pour l'interrogation sur la vitesse de rotation (512) et/ou la quantité d'injection (514) et/ou la masse d'air (513) et, dans le cas de moteurs Diesel à combustion interne, sur la limite de fumée (513).

8. Système d'ordinateur selon la revendication 6,
**caractérisé en ce que**
le composant "moteur" (420) est divisé en au moins un des autres composants additionnels : mécanique de moteur (604) avec une interface (614) pour l'interrogation sur la vitesse de rotation, la position et/ou la température ; système de gaz d'échappement (603) avec une interface pour la prédétermination d'au moins un mode de fonctionnement (618) ; système de carburant (607) avec une interface (617) pour la prédétermination d'au moins un mode de fonctionnement et/ou une pression de rampe ; système d'injection (602) avec une interface pour la prédétermination (611) d'au moins un mode de fonctionnement et/ou une composition de mélange (lambda), et une interface pour l'interrogation (610) sur le remplissage et/ou la vitesse de rotation ; système d'allumage (606) avec une interface pour la prédétermination (615) d'au moins un mode de fonctionnement et/ou rendement, et une interface pour l'interrogation (616) sur le remplissage et/ou la vitesse de rotation ; système d'air (601) avec des interfaces pour l'interrogation sur la vitesse de rotation (612) et/ou le remplissage (619), et/ou une interface pour la prédétermination (613) d'au moins un mode de fonctionnement et/ou d'une valeur théorique de remplissage ; et coordinateur de moteur (600) avec une interface pour l'interrogation (620) sur la vitesse de rotation, le rendement et/ou le remplissage, et/ou une interface pour la prédétermination du couple (615), et
dans le cas où le coordinateur de moteur (600) est localisé en dehors du composant "moteur", il se trouve entre ce composant "moteur" (420) et les autres composants en lesquels le composant "moteur" (420) est divisé.

9. Système d'ordinateur selon la revendication 7 ou 8,
**caractérisé en ce que**
le composant "mécanique du moteur" (504) est divisé en au moins un des autres composants : détermination de la vitesse de rotation avec une interface pour l'interrogation sur la vitesse de rotation (608), et/ou protection du moteur (605) avec une interface pour l'interrogation sur la limitation (609) ; et/ou le composant "système d'air" (501) est divisé au moins en les composants "ligne d'aspiration" (601) et "ligne de gaz d'échappement" (602).

10. Système d'ordinateur selon au moins une des revendications précédentes,
**caractérisé en ce que**
l'unité d'entraînement, en tant que composant "moteur" (420), est commandée en fonction des composants prédéterminés : coordinateur du mouvement du véhicule (404) avec prédétermination du couple (704) ; propulsion (405) avec prédétermination de la vitesse de rotation et/ou du couple (705), groupes secondaires (706) avec prédétermination de la vitesse de rotation et/ou du couple (703) ; coordinateur du véhicule (305) avec au moins une prédétermination du couple et/ou de la vitesse de rotation (702) ; boîte de vitesse (418) avec prédétermination de la vitesse de rotation et/ou du couple (701) ; et coordinateur de la ligne d'entraînement (417) avec prédétermination de la vitesse de rotation et/ou du couple (700).
